# EUROPÄISCHE PATENTSCHRIFT

(11) **EP 1 702 815 B1**
(45) Veröffentlichungstag und Bekanntmachung des Hinweises auf die Patenterteilung: **27.04.2011**
(21) Anmeldenummer: 06111253.8
(22) Anmeldetag: 09.10.2002
(51) Int. Cl.: B60R 21/26

(54) **Kaltgasgenerator**
Cold gas generator
Générateur de gaz froid

(30) Priorität: 14.02.2002 AT 962002 U; 24.07.2002 AT 11222002
(43) Veröffentlichungstag der Anmeldung: 20.09.2006
(62) Teilanmeldung aus: 02778970.0
(73) Patentinhaber: iSi Airbag GmbH, 1210 Wien (AT)
(72) Erfinder: Schäfer, Dietmar, 1130, Wien (AT)
(74) Vertreter: KLIMENT & HENHAPEL

(56) Entgegenhaltungen:
- EP-A- 0 776 797
- US-A- 5 678 856
- US-A1- 5 291 828
- US-B1- 6 168 202
- PATENT ABSTRACTS OF JAPAN Bd. 2000, Nr. 03, 30. März 2000 (2000-03-30) & JP 11 347140 A (KAGEYAMA TAKESHI;HOSOYA FIREWORKS CO LTD; PROP:KK), 21. Dezember 1999 (1999-12-21)

## Beschreibung

Die vorliegende Erfindung bezieht sich auf einen Kaltgasgenerator zum Aufblasen eines Gassacks (Airbags) gemäß dem Oberbegriff des Anspruchs 1.

Solche Gasgeneratoren dienen dazu, mit gespeichertem Gas im Funktionsfall einen verbundenen Gassack, beispielsweise ein Airbag in einem Auto, aufzublasen.

Ein bei der Befüllung von Airbags auftretendes Problem ist die hohe Temperaturentwicklung die insbesondere bei pyrotechnisch generiertem Gas auftritt, was neben der Gefährdung der Insassen auch die thermische Zerstörung des Gassacks mit sich ziehen kann.

Von Hybridgasgeneratoren, die sowohl über eine pyrotechnische Treibladung als auch über eine Kaltgasquelle in Form eines Gasspeichers verfügen ist bekannt, dass der Heißgasstrom einer pyrotechnischen Treibladung ein den Gasbehälter verschließendes Dichtelement durchbrennt. Diese Treibladung wird üblicherweise von einer Zündpille (ein mit einer Ummantelung versehener Anzünder, der in seinem Inneren eine geringe Menge einer pyrotechnischen Zündladung enthält, die über in die Treibladung geführte Zündpins, an die von außen eine elektrische Spannung angelegt wird, zündbar ist) gezündet, die mit einer Ladung von ca. 100mg pyrotechnischem Material keinen signifikanten Einfluss auf die Leistung eines Gasgenerators besitzt. Ein solcher Hybridgasgenerator ist beispielsweise in der EP 699.231 A1 offenbart.

Ein weiteres Beispiel ist in der US-A-5 678 856 offenbart.

Es sind auch Kaltgasgeneratoren bekannt, die auf den Einsatz einer zusätzlichen Treibgasladung verzichten und ausschließlich eine Zündpille zur Zerstörung des Dichtelements verwenden. Dies hat den Vorteil, dass durch das Weglassen der zusätzlichen Treibgasladung die Temperatur des Gases im Gassack auf das thermodynamische Verhalten des eingesetzten Gases im Gasdruckbehälter reduziert wird, wodurch dieses damit quasi kalt vorliegt. Weiters wird der Anfall von giftigen Reststoffen vermieden, die im Zusammenhang mit dem Abbrand von zusätzlichen pyrotechnischen Treibladungen entstehen. Ein solcher Kaltgasgenerator ist beispielsweise in der DE 100 38 673 A1 offenbart. Dort wird der durch die Zündpille generierte Heißgasstrom in einem kleinen, abgeschlossenen Raum direkt auf das Dichtelement, eine Membran, gelenkt. Durch die Zündung der Zündpille in einem abgeschlossenen Raum entsteht eine Druck- bzw. Schockwelle, die das Dichtelement zerstört. Um diesen kleinen, abgeschlossenen Raum, dessen eine Seite durch das Dichtelement begrenzt ist, zu fertigen, sind durch den Kontakt mit dem unter Druck stehenden Dichtelement hohe Anforderungen an die rohrförmige Abstützung gegeben, was eine unnötig aufwendige Fertigung mit sich bringt. Weiters bedingt der strömungsdynamisch komplexe ringförmige Abströmungsquerschnitt, der nach der Zerstörung des Dichtelements entstehen soll, eine Unsicherheit in Bezug auf die Reproduzierbarkeit des Öffnungsverhaltens. Ein weiterer Nachteil ist, dass die Befüllung und damit auch die Prüfung des Gasdruckbehälters erst nach dem kompletten Zusammenbau des Kaltgasgenerators erfolgen kann, da das Dichtelement ohne zusätzlich Abstützung dem Innendruck des Gasdruckbehälters nicht standhalten würde.

Ziel der vorliegenden Erfindung ist es, einen Kaltgasgenerator zu schaffen, der einen im Aufbau einfachen und äußerst zuverlässigen Öffnungsmechanismus aufweist und gleichzeitig hohe Sicherheit für die Insassen bietet und den Gassack schonend, ohne Gefahr der Zerstörung, aufbläst.

Erfindungsgemäß wird dieses Ziel durch die kennzeichnenden Merkmale des Anspruchs 1 erreicht.

Der Kaltgasgenerator zum Aufblasen eines Gassacks weist einen Gasdruckbehälter mit einer Ausströmöffnung auf. Diese Ausströmöffnung ist mittels einer zerstörbaren, bezogen auf das gespeicherte Gas in die entgegengesetzte Richtung gewölbten Membran verschlossen, wobei die Zerstörung der Membran durch einen auf die Membran gerichteten Heißgasstrahl erfolgt, der ausschließlich durch Zündung einer durch Anlegen eines elektrischen Impulses aktivierbaren Zündpille erzeugt wird.

Im befüllten Zustand des Gasdruckbehälters ist jene diesem abgewandte Oberfläche der Membran zur Gänze und freiliegend in einen über mindestens eine Auslassöffnung mit dem Gassack in Verbindung stehenden Raum gerichtet, durch welchen der auf die Membran über eine Düsenkammer fokussierte Heißgasstrahl geleitet wird. Dadurch ist die Membran auch ohne Abstützung dicht und nicht der Gefahr der Beschädigung und damit Zerstörung ausgesetzt, so dass bei der Fertigung des Kaltgasgenerators die Befüllung und Prüfung des Gasdruckbehälters nicht unbedingt als letztes erfolgen muss.

Indem die Düsenkammer eine Austrittsöffnung für den Austritt des Heißgases aufweist und diese Austrittsöffnung erfindungsgemäß an einer eine Seitenwand der Zündpille im wesentlichen verlängernden Wand der Düsenkammer angeordnet ist, wird der von der aktivierten Zündpille erzeugte Heißgasstrahl von seiner ursprünglichen Richtung umgeleitet, um im Wesentlichen transversal zur Achse der Düsenkammer auf der Membran auftreffen zu können.

Durch die zentrale Zerstörung der Membran ergibt sich ein zuverlässig reproduzierbarer Abströmungsquerschnitt.

Der definierte Abstand zwischen Ausströmöffnung und Austrittsöffnung der Düsenkammer bewirkt eine verlässliche Zerstörung der Membran unter allen Umständen.

Im Anschluss erfolgt nun eine detaillierte Beschreibung der Erfindung. Dabei zeigt
- Fig.1: eine Schnittansicht im Schrägriss eines erfindungsgemäßen Öffnungsmechanismus für einen Kaltgasgenerator mit axialem Gasaustritt
- Fig.2: eine Schnittansicht einer Ausführungsform eines erfindungsgemäßen Öffnungsmechanismus für einen Kaltgasgenerator mit axialem Gasaustritt
- Fig.3: eine Schnittansicht einer bekannten Zündpille

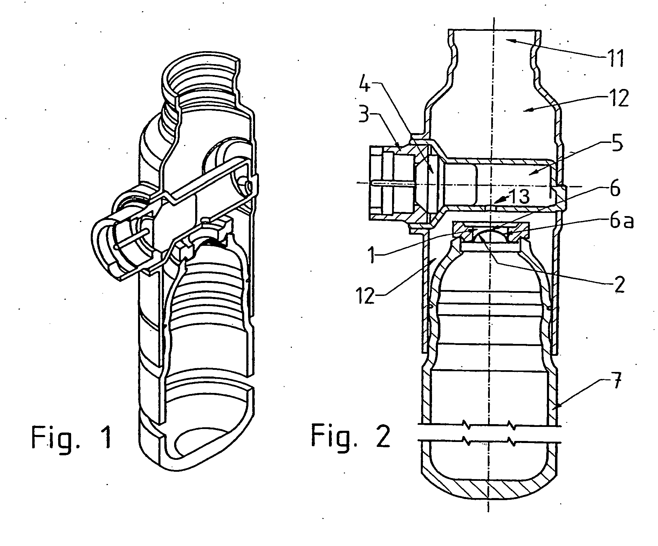

Fig.1 und 2 zeigen einen Kaltgasgenerator mit einem erfindungsgemäßen Öffnungsmechanismus, wobei eine Abströmung des freigesetzten Gases in axialer Richtung möglich ist. Im Bereich oberhalb der Ausströmöffnung 1 des Gasspeichers ist der Öffnungsmechanismus angeordnet, welcher zur Zerstörung der Membran 2 dient und im wesentlichen aus einer Zündpillenhalterung 3, einer Zündpille 4 und einer Düsenkammer 5 besteht.

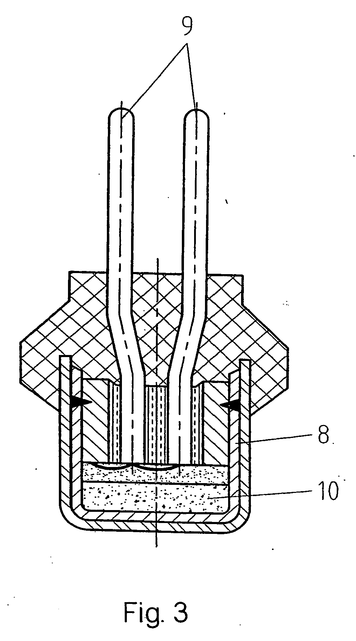

Bei der Zündpille 4 handelt es sich um einen seit langem bekannten Anzünder, dessen wesentlicher Aufbau eine geringe Menge Zündladung 10 in einem Gehäuse 8 aufweist. In die Zündladung 10 sind von außerhalb der Zündpille 4 elektrisch kontaktierbare Zündpins 9 geführt, welche nach Anlegen einer Spannung die Zündladung 10 zünden (siehe Fig.3).

Soll der Gassack, insbesondere der Airbag aufgeblasen werden, wird, wie erwähnt, zuerst die Zündpille 4 durch Anlegen eines elektrischen Zündimpulses gezündet. Die Energiefreisetzung wird in der Düsenkammer 5 gebündelt und als Heißgasstrahl konzentriert auf den höchsten Punkt 6 der Membran 2 geleitet, welche die Ausströmöffnung 1 des Gasspeichers 7 verschließt. An diesem Punkt 6 tritt im Zuge der Druckbelastung der Membran 2 durch die Gasfüllung die höchste Spannung auf, wodurch sich dort ihre dünnste Stelle ergibt.

Wie anhand der Darstellung in Fig.2 nachzuvollziehen ist, verläuft der von der aktivierten Zündpille 4 erzeugte Heißgasstrahl zunächst in Richtung der Achse der Zündpille 4, wird aber von dieser ursprünglichen Richtung umgeleitet, indem die Düsenkammer 5 eine Öffnung für den Austritt des Heißgases aufweist, welche an einer eine Seitenwand der Zündpille 4 im wesentlichen verlängernden Wand der Düsenkammer 5 angeordnet ist. Auf diese Weise trifft der Heißgasstrahl fokussiert und in im Wesentlichen transversal zur Achse der Düsenkammer 5 verlaufender Richtung auf der Membran 2 auf.

Da der Werkstoff der Membran 2 bei Temperatureinwirkung stark an Festigkeit verliert bewirkt die partielle Erhitzung durch den gebündelten Heißgasstrahl eine Schwächung und damit die Zerstörung der unter Last stehenden Membran 2 im Bereich des angeströmten Punktes 6. Die Dynamik des entweichenden, stark komprimierten Gas im Gasspeicher 7 bewirkt in Folge die vollständige Freilegung der Ausströmöffnung 1.

Eine Zerstörung des als Membran 2 ausgebildeten Dichtelements durch eine Druck- bzw. Schockwelle, wozu ein kleiner, abgeschlossener Raum erforderlich ist, ist im vorliegenden Fall nicht gewünscht. Es ist vollkommen ausreichend, den Heißgasstrom über die Düsenkammer 5 gebündelt auf das Dichtelement zu fokussieren. Das Dichtelement kann dabei vollkommen frei liegen. Eine zusätzliche Abstützung ist nicht erforderlich. Die Zerstörung des Dichtelements erfolgt durch thermische Schwächung. Der Innendruck des Gasdruckbehälters 7 zerstört dann das thermisch geschwächte Dichtelement.

Um die Auslösesicherheit nochmals zu erhöhen und damit die Versagenswahrscheinlichkeit zu minimieren, ist vorgesehen, dass der Abstand zwischen dem obersten Punkt der Membran 2 und der Austrittsöffnung 13 der Düsenkammer 5 kleiner oder gleich dem Durchmesser der Ausströmöffnung 1 also dem druckbelasteten Querschnitt der Membran 2 ist. Somit ist die vollständige Zerstörung der Membran auch durch Einsatz einer herkömmlichen Zündpille, die lediglich einen geringen Heißgasstrom erzeugen kann, gewährleistet.

## Patentansprüche

1. Kaltgasgenerator zum Aufblasen eines Gassacks mit Hilfe eines aus einem Gasdruckbehälter (7) ausströmenden Gases, wobei der Gasdruckbehälter (7) mit einer Ausströmöffnung (1) versehen ist, welche mittels einer zerstörbaren, bezogen auf das gespeicherte Gas in die entgegengesetzte Richtung gewölbten Membran (2) verschlossen ist, wobei die Zerstörung der Membran (2) durch einen auf die Membran (2) gerichteten Heißgasstrahl erfolgt, der ausschließlich durch Zündung einer durch Anlegen eines elektrischen Impulses aktivierbaren Zündpille (4) erzeugt wird und im befüllten Zustand des Gasdruckbehälters (7) jene diesem abgewandte Oberfläche (6a) der Membran (2) zur Gänze und freiliegend in einen über mindestens eine Auslassöffnung (11) mit dem Gassack in Verbindung stehenden Raum (12) gerichtet ist, durch welchen der auf die Membran (2) über eine Düsenkammer (5) fokussierte Heißgasstrahl geleitet wird, **dadurch gekennzeichnet, dass** die Düsenkammer (5) eine Austrittsöffnung (13) für den Austritt des Heißgases aufweist und diese Austrittsöffnung (13) an einer eine Seitenwand der Zündpille (4) im wesentlichen verlängernden Wand der Düsenkammer (5) angeordnet ist.

2. Kaltgasgenerator nach Anspruch 1, **dadurch gekennzeichnet, dass** der Abstand zwischen dem obersten Punkt der Membran (2) und der Austrittsöffnung (13) der Düsenkammer (5) kleiner oder gleich dem Durchmesser der Ausströmöffnung (1) ist.

3. Kaltgasgenerator nach Anspruch 1 oder 2, **dadurch gekennzeichnet, dass** die Zündpille (4) eine von einem Gehäuse (8) umschlossene Treibladung (10) umfasst, welche über in diese geführte Zündpins (9) zündbar ist.

4. Kaltgasgenerator nach einem der Ansprüche 1 bis 3, **dadurch gekennzeichnet, dass** die Membran aus einem Werkstoff mit einer Zugfestigkeit von mehr als 850 N/mm gefertigt ist.

## Claims

1. A cold gas generator for inflating a gas bag with the help of a gas flowing out of a gas pressure vessel (7) with the gas pressure vessel (7) being provided with a discharge opening (1) which is closed off by means of a destructible membrane (2) which is arched in a direction which is opposite relative to the stored gas, with the destruction of the membrane (2) occurring by a hot gas jet aimed at the membrane (2), which jet is exclusively produced by the ignition of a primer (4) which can be activated by the application of an electric pulse and where in the filled state of the gas pressure vessel (7) the surface (6a) of the membrane (2) which is averted from the same is directed fully and in an exposed manner into a room (12) which is in connection with the gas bag via at least one discharge opening (11) and through which the hot gas jet is guided which is focused on the membrane (2) via a nozzle chamber (5), **characterized in that** the nozzle chamber (5) comprises an outlet for the hot gas jet which is positioned at a wall of the nozzle chamber (5) acting as an elongated side wall of the primer (4).

2. A cold gas generator as claimed in claim 1, **characterized in that** the distance between the uppermost point of the membrane (2) and the discharge opening (13) of the nozzle chamber (5) is smaller than or equal to the diameter of the discharge opening (1).

3. A cold gas generator as claimed in claim 1 or 2, **characterized in that** the primer (4) comprises a propelling charge (10) enclosed by a housing (8), which charge can be ignited via ignition pins (9) guided into the same.

4. A cold gas generator as claimed in one of the claims 1 to 3, **characterized in that** the membrane is made of a material with a tensile strength of more than 850 N/mm.

## Revendications

1. Générateur à gaz froid destiné à gonfler un sac de gaz à l'aide d'un gaz s'échappant d'un réservoir de gaz sous pression (7), où le réservoir de gaz sous pression (7) est pourvu d'un orifice d'échappement (1) qui est fermé moyennant une membrane (2) destructible, bombée dans la direction opposée à la réserve de gaz, la destruction de la membrane (2) se faisant par un jet de gaz chaud qui est dirigé sur la membrane (2) et qui est généré par l'amorçage d'une pastille explosive (4) activable uniquement par l'application d'une impulsion électrique et où, quand le réservoir de gaz sous pression (7) est rempli, la surface (6a) détournée de celui-ci de la membrane (2) est dirigée, dans son intégralité et de manière à être à découvert, dans un espace (12) qui communique avec le sac de gaz par l'intermédiaire d'au moins un orifice d'évacuation (11), au travers duquel est dirigé le jet de gaz chaud focalisé sur la membrane (2) par une chambre de gicleur (5), **caractérisé en ce que** la chambre de gicleur (5) comporte un orifice de sortie (13) pour la sortie du gaz chaud et que cet orifice de sortie (13) est disposé sur une paroi de la chambre de gicleur (5) prolongeant sensiblement une paroi latérale de la pastille explosive (4).

2. Générateur à gaz froid selon la revendication 1, **caractérisé en ce que** la distance entre le point le plus élevé de la membrane (2) et l'orifice de sortie (13) de la chambre de gicleur (5) est inférieure ou égale au diamètre de l'orifice d'échappement (1).

3. Générateur à gaz froid selon la revendication 1 ou 2, **caractérisé en ce que** la pastille explosive (4) comprend une charge pyrotechnique (10) qui est contenue dans un boîtier (8) et qui est apte à être amorcée par des broches d'allumage (9) introduites dans celle-ci.

4. Générateur à gaz froid selon l'une quelconque des revendications 1 à 3, **caractérisé en ce que** la membrane est réalisée en un matériau présentant une résistance en traction supérieure à 850 N/mm.
